# EUROPÄISCHE PATENTSCHRIFT

(11) **EP 4 530 581 B1**
(45) Veröffentlichungstag und Bekanntmachung des Hinweises auf die Patenterteilung: **11.03.2026**
(21) Anmeldenummer: 23200280.8
(22) Anmeldetag: 28.09.2023
(51) Int. Cl.: G01D 5/20

(54) **ABTASTELEMENT FÜR EINE INDUKTIVE POSITIONSMESSEINRICHTUNG**
SCANNING ELEMENT FOR AN INDUCTIVE POSITION MEASURING DEVICE
ÉLÉMENT DE BALAYAGE POUR UN DISPOSITIF DE MESURE DE POSITION INDUCTIF

(43) Veröffentlichungstag der Anmeldung: 02.04.2025
(73) Patentinhaber: Dr. Johannes Heidenhain GmbH, 83301 Traunreut (DE)
(72) Erfinder: HEUMANN, Martin, 83278 Traunstein (DE); TIEMANN, Marc Oliver, 83329 Waging am See (DE); SELL, Oliver, 83301 Traunreut (DE); FRANK, Alexander, 83278 Traunstein (DE)

(56) Entgegenhaltungen:
- EP-A1- 4 170 289
- US-A1- 2021 117 020
- US-A1- 2022 178 672

## Beschreibung

### GEBIET DER TECHNIK

Die Erfindung betrifft ein Abtastelement für eine induktive Positionsmesseinrichtung gemäß dem Anspruch 1 zur Positionsbestimmung des Abtastelements relativ zu einem Skalenelement.

Induktive Positionsmesseinrichtungen werden beispielsweise als Winkelmessgeräte zur Bestimmung der Winkelposition von relativ zueinander drehbaren Maschinenteilen oder als Längenmessgeräte zur Bestimmung einer Position infolge einer linearen Verschiebung verwendet. Bei induktiven Positionsmesseinrichtungen sind häufig Erregerspuren und Empfängerspuren etwa in Form von Leiterbahnen auf einer gemeinsamen meist mehrlagigen Leiterplatte aufgebracht, die beispielsweise mit einem Stator eines Winkelmessgeräts fest verbunden ist. Insbesondere bei einer Ausführungsform des Abtastelements mit einer Leiterplatte können die Erregerspuren und Empfängerspuren aus Erregerleiterbahnen und Empfängerleiterbahnen gebildet sein. Dieser Leiterplatte gegenüber befindet sich ein Skalenelement, auf dem Teilungsstrukturen aufgebracht sind und welches mit dem Rotor des Positionsmessgeräts verbunden ist. Wenn an den Erregerleiterbahnen ein zeitlich wechselnder elektrischer Erregerstrom angelegt wird, werden in den Empfängerleiterbahnen während der Relativbewegung zwischen Rotor und Stator von der Relativposition abhängige Signale erzeugt. Diese Signale werden dann in einer Auswerteelektronik weiterverarbeitet.

### STAND DER TECHNIK

In der EP 4 170 289 A1 ist eine induktive Positionsmesseinrichtung offenbart, die Empfängerleiterbahnen aufweist, welche durch Lücken unterbrochen sind. Diese Bauweise soll dazu beitragen die Empfindlichkeit gegenüber einer Nick-Verkippung zu reduzieren.

### ZUSAMMENFASSUNG DER ERFINDUNG

Der Erfindung liegt die Aufgabe zugrunde ein vergleichsweise genau arbeitendes, kompaktes und kostengünstig herstellbares Abtastelement für eine induktive Positionsmesseinrichtung zu schaffen, welches unempfindlich gegenüber Nick-Verkippungen arbeitet.

Diese Aufgabe wird erfindungsgemäß durch die Merkmale des Anspruches 1 gelöst.

Das Abtastelement, welches für eine induktive Positionsmesseinrichtung geeignet und bestimmt ist, umfasst eine mehrlagige Leiterplatte welche eine erste Empfängerleiterbahn, die sich entlang einer ersten Richtung erstreckt, aufweist. Zudem weist die Leiterplatte eine Erregerspur auf. Die erste Empfängerleiterbahn umfasst mehrere erste Schleifen, wobei die ersten Schleifen aus mehreren ersten Leiterbahnabschnitten gebildet sind. Die ersten Leiterbahnabschnitte verlaufen in unterschiedlichen Lagen der Leiterplatte und sind, insbesondere durch Vias, seriell miteinander verschaltet und bilden somit einen elektrisch durchgängigen Leiterzug. Entlang einer Teilstrecke sind im Aufbau der Leiterplatte zwei erste Leiterbahnabschnitte gleichlaufend und bezüglich (beziehungsweise sind in) einer dritten Richtung versetzt zueinander angeordnet. Die dritte Richtung ist orthogonal zur ersten Richtung orientiert. Insbesondere verlaufen in der dritten Richtung versetzt in der Teilstrecke zwei Schleifen gleichlaufend und in der dritten Richtung versetzt zueinander in verschiedenen Lagen der Leiterplatte, wobei die Schleifen aus ersten Leiterbahnabschnitten bestehen. Entlang eines ersten Teilstücks, das in der ersten Richtung versetzt zur Teilstrecke angeordnet ist, verläuft im Aufbau der Leiterplatte ein weiterer der ersten Leiterbahnabschnitte. In diesem Teilstück ist aber kein zum weiteren ersten Leiterbahnabschnitt gleichlaufender und in der dritten Richtung versetzter Leiterbahnabschnitt angeordnet. Demnach verläuft im Aufbau der Leiterplatte der weitere der ersten Leiterbahnabschnitte, ohne dass ein erster Leiterbahnabschnitt bezüglich der dritten Richtung versetzt und gleichlaufend zu dem weiteren ersten Leiterbahnabschnitt verläuft.

Die erste Richtung stellt diejenige Richtung dar, in welcher die gesuchte Position gemessen wird (Messrichtung). Da gemäß einer Ausführungsform durch eine Positionsmesseinrichtung mit dem Abtastelement die relative Winkelstellung zwischen dem Skalenelement und dem Abtastelement gemessen werden soll, ist die erste Richtung in diesem Fall eine Umfangsrichtung beziehungsweise eine Tangentialrichtung. Alternativ kann die erste Richtung auch eine lineare Richtung sein, wenn eine relative Verschiebung gemessen werden soll.

Zudem kann eine zweite Richtung definiert werden, die orthogonal zur ersten Richtung verläuft.

Orthogonal zur ersten Richtung und gleichzeitig orthogonal zur zweiten Richtung ist die dritte Richtung orientiert. Die dritte Richtung ist orthogonal zur Leiterplattenebene ausgerichtet. Zudem sind einzelne Lagen der Leiterplatte in der dritten Richtung zueinander versetzt angeordnet. Die dritte Richtung verläuft im Falle einer Messung einer Winkelstellung parallel zu einer (Dreh-) Achse, um welche das Skalenelement relativ zum Abtastelement drehbar ist.

Das Abtastelement kann also eine lineare Skala oder ein gekrümmtes, insbesondere kreisförmiges oder kreissegmentförmiges Skalenelement abtasten, so dass eine lineare Position oder eine Winkelposition gemessen werden kann. Die erste Empfängerleiterbahn kann sich also entlang der ersten Richtung über eine lineare Strecke oder eine gekrümmte Strecke erstrecken. Diese Strecke umfasst Teilabschnitte, nämlich die Teilstrecke und das erste Teilstück.

Gleichlaufende Leiterbahnabschnitte sind Leiterbahnabschnitte, die im Prinzip in die gleiche Richtung verlaufen, insbesondere in der Art von Parallelkurven oder insbesondere im geometrischen Sinn parallel zueinander verlaufen. Insbesondere können entlang der Teilstrecke im Aufbau der Leiterplatte zwei erste Leiterbahnabschnitte bezüglich der dritten Richtung in Bezug auf die dritte Richtung jeweils übereinander liegend angeordnet sein, oder zumindest deren Anfangspunkte übereinander liegen und deren Endpunkte. Die Anfangs- und Endpunkte können als Vias ausgestaltet sein.

Durch die gleichlaufenden Leiterbahnabschnitte werden Signale empfangen beziehungsweise generiert, die jeweils dieselbe Phase aufweisen, so dass durch die serielle Verschaltung der gleichlaufenden Leiterbahnabschnitte eine Erhöhung des Signalpegels auftritt.

Mit Vorteil verlaufen die ersten Leiterbahnabschnitte der ersten Empfängerleiterbahn genau auf vier Lagen der Leiterplatte.

Bei der Messung einer Winkelposition sind das Skalenelement und das Abtastelement, wie oben erwähnt, relativ zueinander um die Achse drehbar angeordnet. Insbesondere für die Messung einer Winkelposition ist es vorteilhaft, wenn sich die erste Empfängerleiterbahn in der ersten Richtung entlang eines Bogensegments über einen ersten Zentriwinkel von weniger als 180°, insbesondere weniger als 135°, mit Vorteil weniger als 90° erstreckt. Als Zentriwinkel ist ein Mittelpunktswinkel um einen Punkt auf der Achse zu verstehen.

In weiterer Ausgestaltung der Erfindung sind entlang der Teilstrecke genau zwei erste Leiterbahnabschnitte gleichlaufend angeordnet und bezüglich der dritten Richtung versetzt zueinander angeordnet. Entlang des ersten Teilstücks verläuft dagegen nur genau ein weiterer erster Leiterbahnabschnitt, ohne dass ein erster Leiterbahnabschnitt bezüglich der dritten Richtung gleichlaufend zu dem weiteren ersten Leiterbahnabschnitt verläuft.

Vorteilhafterweise weist die erste Empfängerleiterbahn entlang der ersten Richtung einen periodischen Verlauf mit einer Periodenlänge auf, wobei sich das erste Teilstück in der ersten Richtung über eine Länge erstreckt, die mindestens so groß ist wie die halbe Periodenlänge. Unter einer Periodenlänge kann für die Messung einer Winkelposition ein Winkel- oder Bogenmaß verstanden werden, so dass die Periodenlänge beispielsweise in Grad angegeben werden kann. Entsprechend kann die Länge, über die sich das Teilstück in der ersten Richtung erstreckt, auch als Winkelmaß angegeben werden.

Mit Vorteil ist die Teilstrecke in der ersten Richtung versetzt zum ersten Teilstück angeordnet.

Vorteilhafterweise umfasst die mehrlagige Leiterplatte auch eine zweite Empfängerleiterbahn, die sich über eine lineare Strecke oder eine gekrümmte Strecke entlang der ersten Richtung erstreckt und die in der ersten Richtung versetzt zur ersten Empfängerleiterbahn angeordnet ist. Die zweite Empfängerleiterbahn umfasst ihrerseits mehrere zweite Schleifen, welche aus mehreren zweiten Leiterbahnabschnitten gebildet sind. Die zweiten Leiterbahnabschnitte sind seriell verschaltet und bilden somit einen elektrisch durchgängigen Leiterzug. Im Aufbau der Leiterplatte sind entlang der Teilstrecke zwei zweite Leiterbahnabschnitte gleichlaufend angeordnet und bezüglich der dritten Richtung versetzt zueinander angeordnet. Entlang eines zweiten Teilstücks, das in der ersten Richtung versetzt zur Teilstrecke angeordnet ist, verläuft ein weiterer der zweiten Leiterbahnabschnitte, ohne dass ein zweiter Leiterbahnabschnitt bezüglich der dritten Richtung versetzt, gleichlaufend zu dem weiteren zweiten Leiterbahnabschnitt verläuft.

Die erste Empfängerleiterbahn und die zweite Empfängerleiterbahn befinden sich auf ein und derselben Empfängerspur. Die zweite Empfängerleiterbahn kann sich wie die erste Empfängerleiterbahn entlang der ersten Richtung über eine lineare Strecke oder eine gekrümmte Strecke erstrecken. Diese Strecke umfasst Teilabschnitte, nämlich die Teilstrecke und das erste Teilstück.

Mit Vorteil weisen die erste Empfängerleiterbahn und die zweite Empfängerleiterbahn entlang der ersten Richtung jeweils einen periodischen Verlauf mit jeweils derselben Periodenlänge auf.

In weiterer Ausgestaltung der Erfindung ist das erste Teilstück in der ersten Richtung versetzt zum zweiten Teilstück angeordnet, so dass sich das erste Teilstück und das zweite Teilstück nicht überlappen.

Vorteilhafterweise verlaufen die ersten Leiterbahnabschnitte der ersten Empfängerleiterbahn und die zweiten Leiterbahnabschnitte der zweiten Empfängerleiterbahn, also beide Empfängerleiterbahnen zusammen, genau auf vier Lagen im Aufbau der Leiterplatte.

Mit Vorteil erstreckt sich die zweite Empfängerleiterbahn in der ersten Richtung entlang eines Bogensegments über einen zweiten Zentriwinkel von weniger als 180°, insbesondere weniger als 135°, mit Vorteil weniger als 90°. Dabei kann sich die zweite Empfängerleiterbahn in der ersten Richtung entlang eines Bogensegments über einen ähnlich großen Zentriwinkel erstrecken wie die erste Empfängerleiterbahn, wobei die erste Empfängerleiterbahn relativ zur zweiten Empfängerleiterbahn in der ersten Richtung versetzt angeordnet ist.

In weiterer Ausgestaltung der Erfindung sind entlang der Teilstrecke im Aufbau der Leiterplatte genau zwei zweite Leiterbahnabschnitte bezüglich der dritten Richtung versetzt zueinander und gleichlaufend angeordnet. Entlang des zweiten Teilstücks verläuft im Aufbau der Leiterplatte genau eine der zweiten Leiterbahnabschnitte, ohne dass ein weiterer zweiter Leiterbahnabschnitt bezüglich der dritten Richtung versetzt und gleichlaufend zu dem ersten Leiterbahnabschnitt verläuft.

Die Erregerspur umschließt vorzugsweise die erste Empfängerleiterbahn und die zweite Empfängerleiterbahn.

Vorteilhafterweise weist die zweite Empfängerleiterbahn entlang der ersten Richtung einen periodischen Verlauf mit einer Periodenlänge auf, wobei sich das zweite Teilstück in der ersten Richtung über eine Länge erstreckt, die mindestens so groß ist wie die halbe Periodenlänge.

Mit Vorteil weisen die erste und die zweite Empfängerleiterbahn entlang der ersten Richtung jeweils einen periodischen Verlauf mit der Periodenlänge auf, wobei in der ersten Richtung sich das erste Teilstück über eine Länge erstreckt und sich das zweite Teilstück über eine gleich große Länge erstreckt.

Vorteilhafte Ausbildungen der Erfindung entnimmt man den abhängigen Ansprüchen.

Weitere Einzelheiten und Vorteile des erfindungsgemäßen Abtastelements ergeben sich aus der nachfolgenden Beschreibung eines Ausführungsbeispiels anhand der beiliegenden Figuren.

### KURZE BESCHREIBUNG DER ZEICHNUNGEN

- Figur 1: eine Draufsicht auf ein Abtastelement,
- Figur 2: ein Detailschnitt durch das Abtastelement,
- Figur 3: eine Draufsicht auf ein Skalenelement,
- Figur 4: eine Detailansicht auf das Skalenelement
- Figur 5a: eine Detailansicht auf erste Leiterbahnabschnitte einer ersten Lage einer Leiterplatte des Abtastelements,
- Figur 5b: eine Detailansicht auf erste Leiterbahnabschnitte einer zweiten Lage der Leiterplatte des Abtastelements,
- Figur 5c: eine Detailansicht auf erste Leiterbahnabschnitte einer dritten Lage der Leiterplatte des Abtastelements,
- Figur 5d: eine Detailansicht auf erste Leiterbahnabschnitte einer vierten Lage der Leiterplatte des Abtastelements,
- Figur 5e: eine Detailansicht auf erste Leiterbahnabschnitte aller vier Lagen der Leiterplatte des Abtastelements,
- Figur 6a: eine Detailansicht auf zweite Leiterbahnabschnitte einer ersten Lage einer Leiterplatte des Abtastelements,
- Figur 6b: eine Detailansicht auf zweite Leiterbahnabschnitte einer zweiten Lage der Leiterplatte des Abtastelements,
- Figur 6c: eine Detailansicht auf zweite Leiterbahnabschnitte einer dritten Lage der Leiterplatte des Abtastelements,
- Figur 6d: eine Detailansicht auf zweite Leiterbahnabschnitte einer vierten Lage der Leiterplatte des Abtastelements,
- Figur 6e: eine Detailansicht auf zweite Leiterbahnabschnitte aller vier Lagen der Leiterplatte des Abtastelements,
- Figur 7: eine Detailansicht auf erste und zweite Empfängerleiterbahnen.

### BESCHREIBUNG DER AUSFÜHRUNGSFORMEN

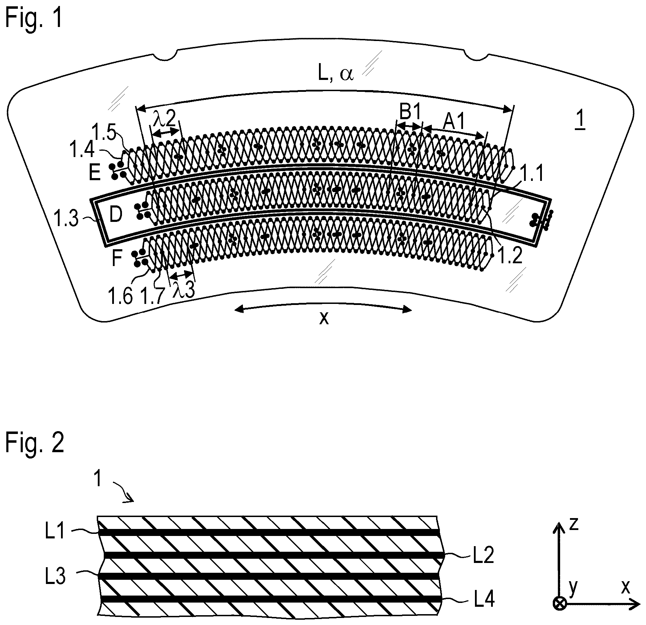

Die Erfindung wird gemäß der Figur 1 anhand einer Positionsmesseinrichtung beschrieben, welche ein Abtastelement aufweist, das eine Leiterplatte 1 umfasst.

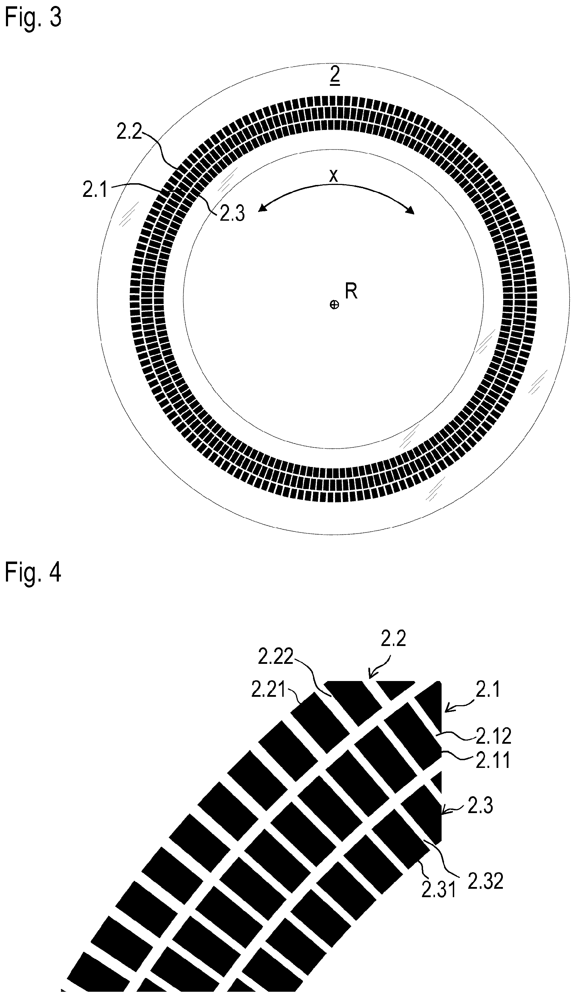

Das Abtastelement kann zur Erfassung einer Winkelstellung eines Skalenelements 2, das in der Figur 3 in einer Draufsicht gezeigt ist, verwendet werden. Das Skalenelement 2 weist eine scheibenförmige beziehungsweise ringförmige Gestalt auf und ist um eine Achse R relativ zur Leiterplatte 1 drehbar angeordnet. Es besteht aus einem Substrat, welches im dargestellten Ausführungsbeispiel aus Epoxidharz hergestellt ist und auf dem drei Teilungsspuren 2.1, 2.2, 2.3 angeordnet sind. Die Teilungsspuren 2.1, 2.2, 2.3 sind ringförmig ausgebildet und bezüglich der Achse R konzentrisch mit unterschiedlichem Durchmesser auf dem Substrat angeordnet. Die Teilungsspuren 2.1, 2.2, 2.3 umfassen Teilungsstrukturen bestehend aus jeweils einer periodischen Abfolge von alternierend angeordneten elektrisch leitfähigen Teilungsbereichen 2.11, 2.21, 2.31 und nichtleitfähigen Teilungsbereichen 2.12, 2.22, 2.32 (Figur 4). Als Material für die elektrisch leitfähigen Teilungsbereiche 2.11, 2.21, 2.31 wurde im gezeigten Beispiel Kupfer auf das Substrat aufgebracht. In den nichtleitfähigen Teilungsbereichen 2.12, 2.22, 2.32 wurde das Substrat dagegen nicht beschichtet. Alternativ kann das Skalenelement auch so ausgestaltet sein, dass dieses ein Stahlsubstrat aufweist, das mit einer isolierenden Lage beschichtet ist, auf welcher Teilungsbereiche, z. B. aus Kupfer, aufgebracht sind.

Durch die Anordnung mit drei Teilungsspuren 2.1, 2.2, 2.3 kann die Winkelstellung des Skalenelements 2 absolut bestimmt werden. Die mittlere Teilungsspur 2.1 des Skalenelements 2 weist die größte Anzahl (hier 182 Paare) von Teilungsbereichen 2.11, 2.12 entlang einer Umfangslinie auf, so dass durch diese die größte Auflösung bezüglich der Messung der Winkelstellung erzielbar ist. Die innere Teilungsspur 2.3 weist die kleinste Anzahl von Teilungsbereichen 2.31, 2.32 entlang einer Umfangslinie auf, im vorgestellten Ausführungsbeispiel sind dies jeweils 168 elektrisch leitfähige Teilungsbereiche 2.31 und 168 nichtleitfähige Teilungsbereiche 2.32. Schließlich weist die äußere Teilungsspur 2.2 eine mittlere Anzahl, hier 169 Paare, von Teilungsbereichen 2.21, 2.22 auf, welche kleiner ist als die der mittleren Teilungsspur 2.1.

In der Figur 1 ist eine Draufsicht auf die Leiterplatte 1 dargestellt. Diese umfasst drei Empfängerspuren D, E F, welche sich entlang einer ersten Richtung x erstrecken, die auch als Messrichtung bezeichnet werden kann und in Umfangsrichtung um die Achse R herum verläuft.

In der Figur 2 ist eine schematische Teilschnittdarstellung durch die Leiterplatte 1 gezeigt, wobei die Teilschnittdarstellung der Figur 2 zur besseren Erläuterbarkeit des erfindungsgemäßen Abtastelements 1 nicht maßstabsgetreu ausgeführt ist. Die Leiterplatte 1 ist, wie oben bereits erwähnt, mehrlagig aufgebaut und umfasst demnach eine erste elektrisch leitfähige Lage L1, eine zweite elektrisch leitfähige Lage L2, eine dritte elektrisch leitfähige Lage L3 und eine vierte elektrisch leitfähige Lage L4. Zudem weist die Leiterplatte 1 in den Figuren nicht dargestellte elektronische Bauteile, die auf der Leiterplatte 1 montiert sind, auf. Die geometrischen Beziehungen der einzelnen Elemente zueinander können mit Hilfe eines Koordinatensystems definiert werden. Dabei ist eine erste Richtung x diejenige Richtung, entlang welcher bestimmungsgemäß eine Positions- beziehungsweise Winkelmessung erfolgen soll. Im vorgestellten Ausführungsbeispiel entspricht die erste Richtung x der Umfangsrichtung. Die Achse R, um welche das Skalenelement 2 drehbar ist, verläuft parallel zu einer dritten Richtung z, die dritte Richtung z kann demnach hier auch als axiale Richtung definiert werden. Orthogonal zur dritten Richtung z und zur ersten Richtung x ist eine zweite Richtung y orientiert, die auch als radiale Richtung bezeichnet werden kann. Die elektrisch leitfähigen Lagen L1 bis L4 sind also gemäß der Figur 2 in der dritten Richtung z zueinander versetzt angeordnet.

Die Empfängerspuren D, E, F verlaufen in den vier elektrisch leitfähigen Lagen L1 bis L4 jeweils in einem Band mit definierter radialer Ausdehnung. Die elektrisch leitfähigen Lagen L1 bis L4 sind so strukturiert, dass gemäß der Figur 1 eine erste Empfängerleiterbahn 1.1 und eine zweite Empfängerleiterbahn 1.2 ausgebildet sind. Die beiden Empfängerleiterbahnen 1.1, 1.2. sind in der ersten Richtung x (Umfangsrichtung) versetzt zueinander angeordnet, so dass diese dem Versatz entsprechend zwei phasenverschobene Signale liefern können. Die Empfängerleiterbahnen 1.1, 1.2 sind als Ringsegmente ausgestaltet und erstrecken sich in der ersten Richtung x (Messrichtung). Somit wird das Skalenelement 2 nur entlang eines Umfangssegments abgetastet und nicht wie häufig im Stand der Technik gleichzeitig über den gesamten Umfang. Im vorgestellten Ausführungsbeispiel erstreckt sich die erste Empfängerleiterbahn 1.1 in der ersten Richtung x entlang eines Bogensegments über einen ersten Zentriwinkel α1 von ca. 25°. Die zweite Empfängerleiterbahn 1.2 erstreckt sich auch in der ersten Richtung x entlang eines Bogensegments über einen zweiten Zentriwinkel α2 der sich geringfügig von α1 unterscheidet. Beispielhaft für alle drei Empfängerspuren D, E, F wird deren Aufbau anhand der radial mittleren ersten Empfängerspur D erläutert.

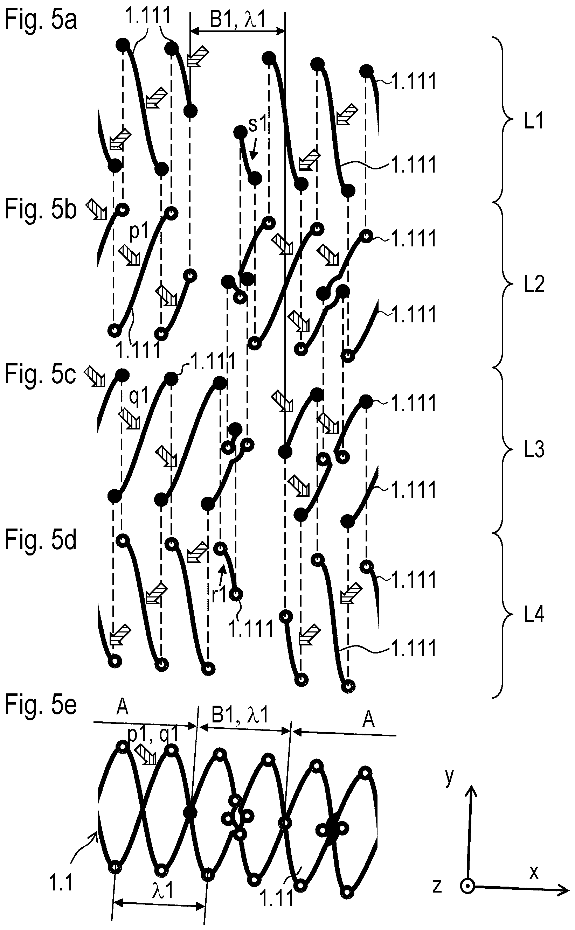

Die erste Empfängerleiterbahn 1.1 umfasst gemäß der Figur 5e mehrere erste Schleifen 1.11, wobei die ersten Schleifen 1.11 ihrerseits aus mehreren ersten Leiterbahnabschnitten 1.111 gebildet sind, welche seriell verschaltet sind. Zudem verlaufen die ersten Leiterbahnabschnitte 1.111 mit Vias verbunden in den unterschiedlichen Lagen L1 bis L4, um unerwünschte Kurzschlüsse zu vermeiden. Wenngleich genau genommen die erste Empfängerleiterbahn 1.1 aus vielen Leiterbahnabschnitten 1.111 besteht, die jeweils auf den unterschiedlichen Lagen L1 bis L4 verteilt und aneinandergereiht sind, wird im Folgenden eine derartige Struktur zusammenfassend als eine Empfängerleiterbahn 1.1 bezeichnet.

In den Figuren 5a bis 5d sind die Verläufe der ersten Leiterbahnabschnitte 1.111 in den vier Lagen L1 bis L4 separat und bezüglich der ersten Richtung x in einem Teilbereich dargestellt, wobei der Übersichtlichkeit halber nicht jeder erste Leiterbahnabschnitt 1.111 mit einem Bezugszeichen versehen wurde. Die Lage L1 ist hier die oberste Lage, jeweils darunter liegend (in -z-Richtung versetzt) folgen dann die zweite, dritte und die vierte Lage L2 bis L4, wobei die vierte Lage L4 dann die unterste Lage darstellt. Die Figur 5e zeigt eine Draufsicht auf die Leiterplatte 1, in der alle vier Lagen L1 bis L4 sichtbar dargestellt sind, mit der ersten Lage L1 als oberste Lage. Die ersten Leiterbahnabschnitte 1.111 weisen vorzugsweise an deren Enden jeweils Durchkontaktierungen beziehungsweise Vias zu einer darüber oder darunter liegenden Lage L1 bis L4 auf. In den Figuren 5a bis 5d sind zur Erläuterung die Kontaktierungen beziehungsweise die Verschaltungen der einzelnen ersten Leiterbahnabschnitte 1.111 durch gestrichelte Linien dargestellt. Zudem wurden Pfeile in die Figuren 5a bis 5d eingefügt, die verdeutlichen sollen, welche ersten Leiterbahnabschnitte 1.111 bezüglich der dritten Richtung z versetzt zueinander und gleichlaufend, insbesondere parallel, angeordnet sind. Hierbei sind diejenigen ersten Leiterbahnabschnitte 1.111, auf die in den Figuren 5a bis 5d übereinander angeordnete Pfeile mit gleicher Schraffur deuten, im Aufbau der Leiterplatte 1 übereinander angeordnet. Beispielsweise liegt der erste Leiterbahnabschnitt 1.111, auf welchen der senkrecht schraffierte Pfeil mit dem Bezugszeichen p1 gerichtet ist, bezüglich der dritten Richtung z versetzt zu dem ersten Leiterbahnabschnitt 1.111, auf welchen der senkrecht schraffierte Pfeil mit dem Bezugszeichen q1 gerichtet ist. Wie aus den Figuren 5b und 5c ersichtlich ist, verlaufen die betreffenden ersten Leiterbahnabschnitte 1.111 auch gleichlaufend, insbesondere parallel, zueinander in den Lagen L2 und L3. Diese parallele Anordnung der ersten Leiterbahnabschnitte 1.111 in den verschiedenen Lagen L1 bis L4 ist in einem ersten Teilstück B1 unterbrochen. In diesem ersten Teilstück B1 erfolgt zum Zweck der seriellen Verschaltung der einzelnen ersten Leiterbahnabschnitte 1.111 eine Verbindung von der vierten Lage L4 auf die erste Lage L1. In diesem Zusammenhang wird derjenige erste Leiterbahnabschnitt 1.111, auf welchen in der Figur 5d der Pfeil mit dem Bezugszeichen r1 gerichtet ist, zunächst elektrisch mit einem kurzen ersten Leiterbahnabschnitt 1.111 in der dritten Lage L3 verbunden. Dieser kurze erste Leiterbahnabschnitt 1.111 in der dritten Lage L3 ist wiederum mit einem kurzen ersten Leiterbahnabschnitt 1.111 in der zweiten Lage L2 verbunden. Am anderen Ende des kurzen ersten Leiterbahnabschnitts 1.111 in der zweiten Lage L2 wird eine Kontaktierung zu einem ersten Leiterbahnabschnitt 1.111 in der ersten Lage L1 vorgenommen, auf welchen der Pfeil mit dem Bezugszeichen s1 gerichtet ist. Auf diese Weise ist ein erster Leiterbahnabschnitt 1.111 in der vierten Lage L4 stufenweise mit einem ersten Leiterbahnabschnitt 1.111 in der ersten Lage L1 elektrisch verbunden. Zudem wird durch die hier beschriebene Gestaltung des ersten Teilstücks B1 Platz für die zweite Empfängerleiterbahn 1.2, die aus zweiten Leiterbahnabschnitten 1.211 gebildet ist, geschaffen, wobei die zweiten Leiterbahnabschnitte 1.211 in den Figuren 5a bis 5d nicht dargestellt sind, aber ebenfalls in den vier Lagen L1 bis L4 verlaufen und die ersten Leiterbahnabschnitte 1.111 in unterschiedlichen Lagen L1 bis L4 elektrisch voneinander isoliert überkreuzen.

In der Figur 5e ist ein Teilabschnitt der ersten Empfängerleiterbahn 1.1 dargestellt, wobei gemäß den Figuren 5a bis 5d erkennbar aus den einzelnen ersten Leiterbahnabschnitten 1.111 Schleifen 1.11 gebildet sind. Entlang einer Teilstrecke A sind im Aufbau der Leiterplatte 1 zumindest zwei erste Leiterbahnabschnitte 1.111 bezüglich der dritten Richtung z, versetzt zueinander und gleichlaufend, insbesondere parallel, angeordnet. Mit anderen Worten verlaufen in der Teilstrecke A Schleifen 1.11 gleichlaufend, insbesondere parallel, übereinander liegend im Aufbau der Leiterplatte 1. Entlang eines ersten Teilstücks B1 verläuft im Aufbau der Leiterplatte 1 dagegen zumindest einer der ersten Leiterbahnabschnitte 1.111, ohne dass ein weiterer erster Leiterbahnabschnitt 1.111 bezüglich der dritten Richtung z versetzt und gleichlaufend, insbesondere parallel, zu einem der ersten Leiterbahnabschnitte 1.111 verlaufen würde. Im ersten Teilstück B1 verläuft also eine Schleife 1.11 einfach, ohne dass eine weitere parallele in der dritten Richtung versetzte Schleife 1.11 vorliegt.

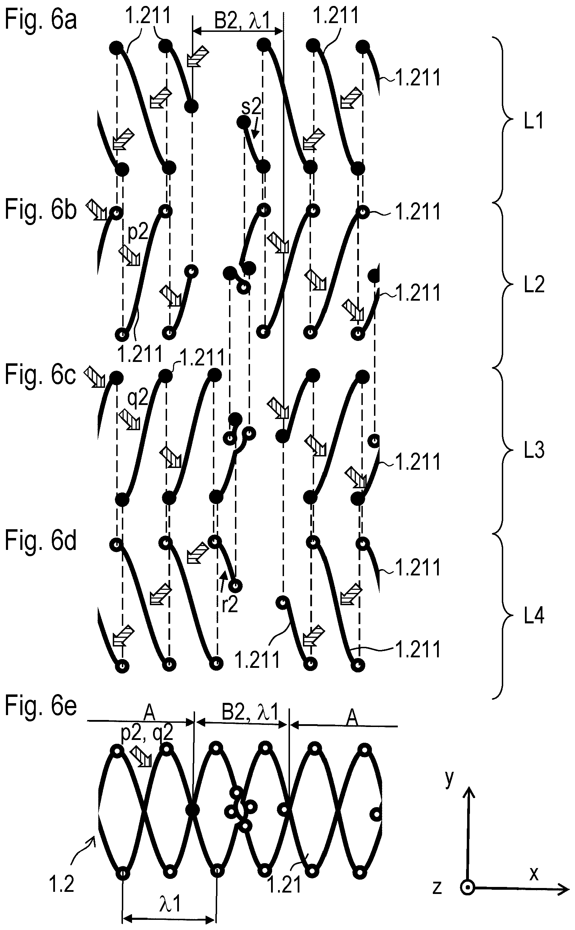

In den Figuren 6a bis 6d sind die Verläufe der zweiten Leiterbahnabschnitte 1.211 in den vier Lagen L1 bis L4 gezeigt, analog zur Darstellung in den Figuren 5a bis 5d. Die Figur 6e zeigt eine Draufsicht auf die Leiterplatte 1, in der alle vier Lagen L1 bis L4 sichtbar dargestellt sind, mit der ersten Lage L1 als oberste Lage.

Auch die zweiten Leiterbahnabschnitte 1.211 weisen jeweils Durchkontaktierungen zu einer darüber oder darunter liegenden Lage L1 bis L4 auf. In den Figuren 6a bis 6d sind zur Erläuterung die Kontaktierungen beziehungsweise die Verschaltungen der einzelnen zweiten Leiterbahnabschnitte 1.211 durch gestrichelte Linien dargestellt. Zudem wurden auch in die Figuren 6a bis 6d Pfeile eingefügt, die verdeutlichen sollen, welche zweiten Leiterbahnabschnitte 1.211 bezüglich der dritten Richtung z versetzt zueinander und gleichlaufend, insbesondere parallel, angeordnet sind. Hierbei sind diejenigen zweiten Leiterbahnabschnitte 1.211, auf die in den Figuren 6a bis 6d übereinander angeordnete Pfeile mit gleicher Schraffur deuten, im Aufbau der Leiterplatte 1 übereinander angeordnet. Entsprechend liegt der zweite Leiterbahnabschnitt 1.211, auf welchen der senkrecht schraffierte Pfeil mit dem Bezugszeichen p2 gerichtet ist, bezüglich der dritten Richtung z versetzt zu dem zweiten Leiterbahnabschnitt 1.211, auf welchen der senkrecht schraffierte Pfeil mit dem Bezugszeichen q2 gerichtet ist. Wie aus den Figuren 6b und 6c ersichtlich ist, verlaufen die betreffenden zweiten Leiterbahnabschnitte 1.211 auch gleichlaufend, insbesondere parallel, zueinander in den Lagen L2 und L3. Diese parallele Anordnung der zweiten Leiterbahnabschnitte 1.211 in den verschiedenen Lagen L1 bis L4 ist in einem zweiten Teilstück B2 unterbrochen. In diesem zweiten Teilstück B2 erfolgt zum Zweck der seriellen Verschaltung der einzelnen zweiten Leiterbahnabschnitte 1.211 eine Verbindung von der vierten Lage L4 auf die erste Lage L1. In diesem Zusammenhang wird derjenige zweite Leiterbahnabschnitt 1.211, auf welchen in der Figur 6d der Pfeil mit dem Bezugszeichen r2 gerichtet ist, zunächst elektrisch mit einem kurzen zweiten Leiterbahnabschnitt 1.211 in der dritten Lage L3 verbunden. Dieser kurze zweite Leiterbahnabschnitt 1.211 in der dritten Lage L3 ist wiederum mit einem kurzen zweiten Leiterbahnabschnitt 1.211 in der zweiten Lage L2 verbunden. Am anderen Ende des kurzen zweiten Leiterbahnabschnitts 1.211 in der zweiten Lage L2 wird eine Kontaktierung zu einem zweiten Leiterbahnabschnitt 1.211 in der ersten Lage L1 vorgenommen, auf welchen der Pfeil mit dem Bezugszeichen s2 gerichtet ist. Auf diese Weise ist ein zweiter Leiterbahnabschnitt 1.211 in der vierten Lage L4 stufenweise mit einem zweiten Leiterbahnabschnitt 1.211 in der ersten Lage L1 elektrisch verbunden. Zudem wird durch die hier beschriebene Gestaltung des zweiten Teilstücks B2 Platz für die erste Empfängerleiterbahn 1.1, die aus den ersten Leiterbahnabschnitten 1.111 gebildet ist, geschaffen, wobei die ersten Leiterbahnabschnitte 1.111 in den Figuren 6a bis 6d nicht dargestellt sind, aber ebenfalls in den vier Lagen L1 bis L4 verlaufen und die zweiten Leiterbahnabschnitte 1.211 in unterschiedlichen Lagen L1 bis L4 elektrisch voneinander isoliert überkreuzen.

In der Figur 6e ist ein Teilabschnitt der zweiten Empfängerleiterbahn 1.2 dargestellt, wobei gemäß den Figuren 6a bis 6d erkennbar aus den einzelnen zweiten Leiterbahnabschnitten 1.211 Schleifen 1.21 gebildet sind. Entlang der Teilstrecken A sind im Aufbau der Leiterplatte 1 zumindest zwei zweite Leiterbahnabschnitte 1.211 bezüglich der dritten Richtung z, versetzt zueinander und gleichlaufend, insbesondere parallel, angeordnet. Mit anderen Worten verlaufen in den Teilstrecken A Schleifen 1.21 gleichlaufend, insbesondere parallel, übereinander liegend im Aufbau der Leiterplatte 1. Entlang des zweiten Teilstück B2 verläuft im Aufbau der Leiterplatte 1 dagegen zumindest einer der zweiten Leiterbahnabschnitte 1.211, ohne dass ein weiterer zweiter Leiterbahnabschnitt 1.211 bezüglich der dritten Richtung z versetzt und gleichlaufend, insbesondere parallel, zu einem der zweiten Leiterbahnabschnitte 1.211 verlaufen würde. Im zweiten Teilstück B2 verläuft also eine Schleife 1.21 einfach, ohne dass eine weitere parallele in der dritten Richtung versetzte Schleife 1.21 vorliegt.

Die Empfängerleiterbahnen 1.1 1.2 beziehungsweise die zugehörigen Schleifen 1.11, 1. 21 weisen einen räumlich periodischen Verlauf auf, der im Wesentlichen sinusförmig beziehungsweise sinusartig ausgestaltet ist. Die erste Empfängerleiterbahn 1.1 und die zweite Empfängerleiterbahn 1.2 der Empfängerspur D weisen eine erste Periodenlänge λ1 auf. Die Empfängerleiterbahnen 1.4, 1.5 der Empfängerspur E weisen jeweils eine zweite Periodenlänge λ2 auf und die Empfängerleiterbahnen 1.6, 1.7 der Empfängerspur F weisen jeweils eine dritte Periodenlänge λ3 auf. Im vorgestellten Ausführungsbeispiel ist die erste Periodenlänge λ1 kleiner als die zweite Periodenlänge λ2 und die zweite Periodenlänge λ2 kleiner als die dritte Periodenlänge λ3 (λ1 < λ2 < λ3), wobei die Periodenlängen λ1, λ2, λ3 hier als Winkelmaß in Grad angegeben werden.

Im vorgestellten Ausführungsbeispiel sind innerhalb der Empfängerspur D die ersten und die zweiten Empfängerleiterbahnen 1.1, 1.2 so angeordnet beziehungsweise so in der ersten Richtung versetzt, dass diese 0° und 90°-Signale liefern. Die gleiche Betrachtung gilt auch für die Empfängerspuren E, F, deren Empfängerleiterbahnen 1.4, 1.5, 1.6, 1.7 ebenfalls 0° und 90°-Signale liefern.

Die erste Empfängerspur D liefert Positionssignale mit einer höheren Auflösung als die beiden anderen Empfängerspuren E, F, insbesondere weil die erste Periodenlänge λ1 kleiner ist als die zweite Periodenlänge λ2.

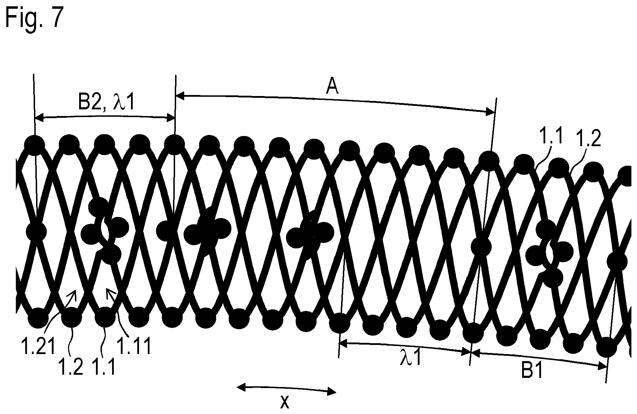

In der Figur 7 sind die erste Empfängerleiterbahn 1.1 und die zweite Empfängerleiterbahn 1.2 beziehungsweise die daraus gebildeten Schleifen 1.11, 1.21 übereinanderliegend dargestellt, wie dies im Aufbau der Leiterplatte 1 der Fall ist. Im ersten Teilstück B1 befinden sich Vias, durch welche ein erster Leiterbahnabschnitt 1.111 in der vierten Lage L4 stufenweise mit einem ersten Leiterbahnabschnitt 1.111 in der ersten Lage L1 elektrisch verbunden ist. Analog hierzu befinden sich im zweiten Teilstück B2 zweite Leiterbahnabschnitte 1.211, die ebenfalls mit Vias stufenweise mit einem zweiten Leiterbahnabschnitt 1.211 in der ersten Lage L1 elektrisch verbunden ist. An den Rändern des ersten Teilstücks B1 und des zweiten Teilstücks B2 sind in der Figur 7 auch Vias zu sehen. Diese bilden sozusagen Umkehrpunkte für die Schleifen 1.11, 1.21, so dass im Teilstück A die Schleifen 1.11, 1.21 im Aufbau der Leiterplatte 1 doppelt ausgeführt sind, in der dritten Richtung zueinander versetzt und parallel auf unterschiedlichen Lagen L1 bis L4. Dagegen sind Im ersten Teilstück B1 die Schleifen 1.11 und im zweiten Teilstück B2 die Schleifen 1.21 jeweils nur einmal ausgebildet. Wenngleich innerhalb einer Periodenlänge λ1 vier Leiterbahnzüge der Empfängerleiterbahnen 1.1, 1.2 verlaufen, so werden hier bedingt durch die serielle Verschaltung und die Umkehrpunkte nur zwei Phasen abgetastet beziehungsweise zwei Signale (0°, 90°-Signale) erzeugt.

Ferner umfasst die Leiterplatte 1 eine Erregerspur 1.3, die hier zwei Erregerleiterbahnen aufweist. Die Erregerspur 1.3 umschließt die erste und die zweite Empfängerspur 1.1, 1.2.

Im zusammengebauten Zustand stehen sich die Leiterplatte 1 und das Skalenelement 2 mit axialem Abstand beziehungsweise Luftspalt gegenüber, so dass bei einer Relativdrehung zwischen dem Skalenelement 2 und der Leiterplatte 1 in den Empfängerspuren D, E, F, insbesondere auch in den Empfängerleiterbahnen 1.1, 1.2 jeweils ein von der jeweiligen Winkelposition abhängiges Signal durch Induktionseffekte erzeugbar ist. Voraussetzung für die Bildung von entsprechenden Signalen ist, dass die Erregerleiterbahnen der erregerspur 1.3 ein zeitlich wechselndes elektromagnetisches Erregerfeld im Bereich der jeweilig abgetasteten Teilungsstrukturen erzeugen. Im dargestellten Ausführungsbeispiel sind die Erregerleiterbahnen als mehrere planar-parallele stromdurchflossene Einzel-Leiterbahnen ausgebildet. Das Abtastelement weist auf der Leiterplatte 1 eine elektronische Schaltung mit den elektronischen Bauteilen auf, die über weitere in den Figuren nicht dargestellte Lagen der Leiterplatte 1 miteinander elektrisch verbunden sind.

Wird die Erregerspur 1.3 in einer entsprechenden Stromrichtung bestromt, so bildet sich um die Erregerleiterbahnen ein schlauch- bzw. zylinderförmig orientiertes elektromagnetisches Feld aus. Die Feldlinien des resultierenden elektromagnetischen Feldes verlaufen um die Erregerspuren 1.3, wobei die Richtung der Feldlinien in bekannter Art und Weise von der Stromrichtung in den Erregerleiterbahnen abhängt. Im Bereich der leitfähigen Teilungsbereiche 2.11, 2.21, 2.31 werden Wirbelströme induziert, so dass jeweils eine von der Winkelstellung abhängige Modulation des Feldes erreicht wird.

Entsprechend kann durch die Empfängerleiterbahnen 1.1, 1.2 jeweils die relative Winkelstellung gemessen werden. Die Empfängerleiterbahnen 1.1 1.2 sind so angeordnet, dass diese um 90° phasenversetzte Signale liefern, so dass auch eine Bestimmung der Drehrichtung vorgenommen werden kann. Die Signale, die von den Empfängerleiterbahnen 1.1, 1.2 erzeugt werden, werden mit Hilfe von einigen der elektronischen Bauteile, die eine Auswerteschaltung bilden, weiterverarbeitet. Die Signale der ersten Empfängerspur D liefern bei der Abtastung der mittleren Teilungsspur 2.1 des Skalenelements 2 die größte beziehungsweise feinste Auflösung der Winkelstellung.

Gerade bei einer Segmentabtastung, wie sie hier vorliegt, bei der sich die erste Empfängerleiterbahn 1.1 in der ersten Richtung x entlang eines Bogensegments erstreckt ist, es vorteilhaft, wenn relative Nickbewegungen, also Verdrehbewegungen zwischen der Leiterplatte 1 und dem Skalenelement 2 um eine Nickachse, die senkrecht zur ersten Richtung x, hier radial, orientiert ist, keine signifikanten Messfehler bei der Bestimmung der Winkelposition zur Folge haben. Durch die hier vorgestellte Leiterplatte 1 beziehungsweise durch das hier vorgestellte Abtastelement können derartige durch Nickbewegungen hervorgerufene Fehler weitgehend kompensiert werden. Zudem kann durch die Anordnung der Empfängerleiterbahnen 1.1, 1.2 eine überaus große Signalstärke erreicht werden.

## Patentansprüche

1. Abtastelement für eine induktive Positionsmesseinrichtung, das eine mehrlagige Leiterplatte (1) umfasst, welche eine erste Empfängerleiterbahn (1.1), die sich entlang einer ersten Richtung (x) erstreckt, sowie eine Erregerspur (1.3) aufweist, wobei
die erste Empfängerleiterbahn (1.1) aus mehreren ersten Leiterbahnabschnitten (1.111) gebildet ist, welche durch Vias seriell verschaltet sind und einen elektrisch durchgängigen Leiterzug bilden, wobei aus den ersten Leiterbahnabschnitten (1.111) Schleifen (1.11) gebildet sind, wobei
entlang einer Teilstrecke (A) im Aufbau der Leiterplatte (1) zwei erste Leiterbahnabschnitte (1.111) bezüglich einer dritten Richtung (z) versetzt zueinander und gleichlaufend angeordnet sind, wobei die dritte Richtung (z) orthogonal zur ersten Richtung (x) orientiert ist, wobei in der Teilstrecke (A) die Schleifen (1.11) gleichlaufend, übereinander liegend im Aufbau der Leiterplatte (1) verlaufen, so dass durch die gleichlaufenden ersten Leiterbahnabschnitte (1.111) Signale generierbar sind, die jeweils dieselbe Phase aufweisen, so dass durch die serielle Verschaltung der gleichlaufenden ersten Leiterbahnabschnitte (1.111) eine Erhöhung des Signalpegels auftritt, und
entlang eines ersten Teilstücks (B1), das in der ersten Richtung (x) versetzt zur Teilstrecke (A) angeordnet ist, im Aufbau der Leiterplatte (1) ein weiterer der ersten Leiterbahnabschnitte (1.111) verläuft, wobei im ersten Teilstück (B1) eine Schleife (1.11) einfach verläuft, ohne dass eine weitere parallele in der dritten Richtung versetzte Schleife (1.11) vorliegt und ohne dass ein erster Leiterbahnabschnitt (1.111) bezüglich der dritten Richtung (z) versetzt und gleichlaufend zu dem weiteren ersten Leiterbahnabschnitt (1.111) angeordnet ist.

2. Abtastelement gemäß dem Anspruch 1, wobei die ersten Leiterbahnabschnitte (1.111) der ersten Empfängerleiterbahn (1.1) genau auf vier Lagen (L1, L2, L3, L4) der Leiterplatte (1) verlaufen.

3. Abtastelement gemäß einem der vorhergehenden Ansprüche, wobei sich die erste Empfängerleiterbahn (1.1) in der ersten Richtung (x) entlang eines Bogensegments über einen ersten Zentriwinkel (α1) von weniger als 180° erstreckt.

4. Abtastelement gemäß einem der vorhergehenden Ansprüche, wobei entlang der Teilstrecke (A) im Aufbau der Leiterplatte (1) genau zwei erste Leiterbahnabschnitte (1.111) bezüglich der dritten Richtung (z) versetzt zueinander und gleichlaufend angeordnet sind und entlang des ersten Teilstücks (B1) im Aufbau der Leiterplatte (1) genau ein weiterer erster Leiterbahnabschnitt (1.111) verläuft.

5. Abtastelement gemäß einem der vorhergehenden Ansprüche, wobei die erste Empfängerleiterbahn (1.1) entlang der ersten Richtung (x) einen periodischen Verlauf mit einer Periodenlänge (λ1) aufweist, wobei sich das erste Teilstück (B1) in der ersten Richtung (x) über eine Länge erstreckt, die mindestens so groß ist wie die halbe Periodenlänge (λ1).

6. Abtastelement gemäß einem der vorhergehenden Ansprüche, wobei die Teilstrecke (A) in der ersten Richtung (x) versetzt zum ersten Teilstück (B1) angeordnet ist.

7. Abtastelement gemäß einem der vorhergehenden Ansprüche, wobei die mehrlagige Leiterplatte (1) eine zweite Empfängerleiterbahn (1.2) umfasst, die sich entlang der ersten Richtung (x) erstreckt, wobei
die zweite Empfängerleiterbahn (1.2) aus mehreren zweiten Leiterbahnabschnitten (1.211) gebildet ist, welche durch Vias seriell verschaltet sind und einen elektrisch durchgängigen Leiterzug bilden, wobei aus den zweiten Leiterbahnabschnitten (1.211) Schleifen (1.21) gebildet sind, wobei
entlang der Teilstrecke (A) im Aufbau der Leiterplatte (1) zwei zweite Leiterbahnabschnitte (1.211) bezüglich der dritten Richtung (z) versetzt zueinander und gleichlaufend angeordnet sind, wobei in der Teilstrecke (A) die Schleifen (1.21) gleichlaufend, übereinander liegend im Aufbau der Leiterplatte (1) verlaufen, so dass durch die gleichlaufenden zweiten Leiterbahnabschnitte (1.211) Signale generierbar sind, die jeweils dieselbe Phase aufweisen, so dass durch die serielle Verschaltung der gleichlaufenden zweiten Leiterbahnabschnitte (1.211) eine Erhöhung des Signalpegels auftritt, und
entlang eines zweiten Teilstücks (B2), das in der ersten Richtung (x) versetzt zur Teilstrecke (A) angeordnet ist, im Aufbau der Leiterplatte (1) ein weiterer der zweiten Leiterbahnabschnitte (1.211) verläuft, wobei im zweiten Teilstück (B2) eine Schleife (1.21) einfach verläuft, ohne dass eine weitere parallele in der dritten Richtung versetzte Schleife (1.21) vorliegt und ohne dass ein zweiter Leiterbahnabschnitt (1.211) bezüglich der dritten Richtung (z) versetzt und gleichlaufend zu dem weiteren zweiten Leiterbahnabschnitt (1.211) und angeordnet ist.

8. Abtastelement gemäß dem Anspruch 7, wobei die erste Empfängerleiterbahn (1.1) und die zweite Empfängerleiterbahn (1.2) entlang der ersten Richtung (x) jeweils einen periodischen Verlauf mit derselben Periodenlänge (λ1) aufweisen.

9. Abtastelement gemäß dem Anspruch 7 oder 8, wobei das erste Teilstück (B1) in der ersten Richtung (x) versetzt zum zweiten Teilstück (B2) angeordnet ist.

10. Abtastelement gemäß einem der Ansprüche 7, 8 oder 9, wobei die ersten Leiterbahnabschnitte (1.111) der ersten Empfängerleiterbahn (1.1) und die zweiten Leiterbahnabschnitte (1.211) der zweiten Empfängerleiterbahn (1.2) genau auf vier Lagen (L1, L2, L3, L4) der Leiterplatte (1) verlaufen.

11. Abtastelement gemäß einem der Ansprüche 7 bis 10, wobei sich die zweite Empfängerleiterbahn (1.2) in der ersten Richtung (x) entlang eines Bogensegments über einen zweiten Zentriwinkel (α2) von weniger als 180° erstreckt.

12. Abtastelement gemäß einem der Ansprüche 7 bis 11, wobei sich die erste Empfängerleiterbahn (1.1) in der ersten Richtung (x) entlang eines Bogensegments über einen ersten Zentriwinkel (α1) von weniger als 180° erstreckt, wobei sich die zweite Empfängerleiterbahn (1.2) in der ersten Richtung (x) entlang eines Bogensegments über eine zweiten Zentriwinkel (α2) von weniger als 180° erstreckt, wobei die erste Empfängerleiterbahn (1.1) relativ zur zweiten Empfängerleiterbahn (1.2) in der ersten Richtung (x) versetzt angeordnet ist.

13. Abtastelement gemäß einem der Ansprüche 7 bis 12, wobei entlang der Teilstrecke (A) im Aufbau der Leiterplatte (1) genau zwei zweite Leiterbahnabschnitte (1.211) bezüglich der dritten Richtung (z) versetzt zueinander und gleichlaufend angeordnet sind und entlang des zweiten Teilstücks (B2) im Aufbau der Leiterplatte (1) genau einer der zweiten Leiterbahnabschnitte (1.211) verläuft.

14. Abtastelement gemäß einem der Ansprüche 7 bis 13, wobei die zweite Empfängerleiterbahn (1.2) entlang der ersten Richtung (x) einen periodischen Verlauf mit einer Periodenlänge (λ1) aufweist, wobei sich das zweite Teilstück (B2) in der ersten Richtung (x) über eine Länge erstreckt, die mindestens so groß ist wie die halbe Periodenlänge (λ1).

15. Abtastelement gemäß einem der Ansprüche 7 bis 14, wobei die erste Empfängerleiterbahn (1.1) und die zweite Empfängerleiterbahn (1.2) entlang der ersten Richtung (x) jeweils einen periodischen Verlauf mit einer Periodenlänge (λ1) aufweisen, wobei in der ersten Richtung (x) sich das erste Teilstück (B1) über eine Länge erstreckt und sich das zweite Teilstück (B2) über eine Länge erstreckt, wobei die Längen gleich groß sind.

## Claims

1. Scanning element for an inductive position measuring device, the scanning element comprising a multilayer printed circuit board (1) which has a first receiver conductor track (1.1), which extends along a first direction (x), and an excitation track (1.3), wherein
the first receiver conductor track (1.1) is formed from a plurality of first conductor track portions (1.111), which are interconnected in series by vias and form an electrically continuous conductor trace, wherein loops (1.11) are formed from the first conductor track portions (1.111), wherein
two first conductor track portions (1.111) are arranged offset from each other with respect to a third direction (z) and co-directionally along a sub-section (A) in the structure of the printed circuit board (1), wherein the third direction (z) is oriented orthogonally to the first direction (x), wherein the loops (1.11) run co-directionally and situated one above the other in the structure of the printed circuit board (1) in the sub-section (A), so that signals can be generated by the co-directional first conductor track portions (1.111), the signals each having the same phase, so that an increase in the signal level occurs owing to the series interconnection of the co-directional first conductor track portions (1.111), and
a further of the first conductor track portions (1.111) runs along a first part (B1), which is arranged offset from the sub-section (A) in the first direction (x), in the structure of the printed circuit board (1), wherein a loop (1.11) runs with a single turn in the first part (B1), without a further parallel loop (1.11) which is offset in the third direction being present and without a first conductor track portion (1.111) being arranged offset with respect to the third direction (z) from and co-directionally to the further first conductor track portion (1.111).

2. Scanning element according to Claim 1, wherein the first conductor track portions (1.111) of the first receiver conductor track (1.1) run exactly on four layers (L1, L2, L3, L4) of the printed circuit board (1).

3. Scanning element according to either of the preceding claims, wherein the first receiver conductor track (1.1) extends along an arc segment over a first central angle (α1) of less than 180° in the first direction (x).

4. Scanning element according to any of the preceding claims, wherein exactly two first conductor track portions (1.111) are arranged offset from each other with respect to the third direction (z) and co-directionally along the sub-section (A) in the structure of the printed circuit board (1) and exactly one further first conductor track portion (1.111) runs along the first part (B1) in the structure of the printed circuit board (1).

5. Scanning element according to any of the preceding claims, wherein the first receiver conductor track (1.1) has a periodic characteristic having a period length (λ1) along the first direction (x), wherein the first part (B1) extends over a length which is at least equal to half the period length (λ1) in the first direction (x).

6. Scanning element according to any of the preceding claims, wherein the sub-section (A) is arranged offset from the first part (B1) in the first direction (x).

7. Scanning element according to any of the preceding claims, wherein the multilayer printed circuit board (1) comprises a second receiver conductor track (1.2) which extends along the first direction (x), wherein
the second receiver conductor track (1.2) is formed from a plurality of second conductor track portions (1.211), which are interconnected in series by vias and form an electrically continuous conductor trace, wherein loops (1.21) are formed from the second conductor track portions (1.211), wherein
two second conductor track portions (1.211) are arranged offset from each other with respect to the third direction (z) and co-directionally along a sub-section (A) in the structure of the printed circuit board (1), wherein the loops (1.21) run co-directionally and situated one above the other in the structure of the printed circuit board (1) in the sub-section (A), so that signals can be generated by the co-directional second conductor track portions (1.211), the signals each having the same phase, so that an increase in the signal level occurs owing to the series interconnection of the co-directional second conductor track portions (1.211), and a further of the second conductor track portions (1.211) runs along a second part (B2), which is arranged offset from the sub-section (A) in the first direction (x), in the structure of the printed circuit board (1), wherein a loop (1.21) runs with a single turn in the second part (B2), without a further parallel loop (1.21) which is offset in the third direction being present and without a second conductor track portion (1.211) being arranged offset with respect to the third direction (z) from and co-directionally to the further second conductor track portion (1.211).

8. Scanning element according to Claim 7, wherein the first receiver conductor track (1.1) and the second receiver conductor track (1.2) each have a periodic characteristic having the same period length (λ1) along the first direction (x).

9. Scanning element according to Claim 7 or 8, wherein the first part (B1) is arranged offset from the second part (B2) in the first direction (x).

10. Scanning element according to any of Claims 7, 8 and 9, wherein the first conductor track portions (1.111) of the first receiver conductor track (1.1) and the second conductor track portions (1.211) of the second receiver conductor track (1.2) run exactly on four layers (L1, L2, L3, L4) of the printed circuit board (1).

11. Scanning element according to any of Claims 7 to 10, wherein the second receiver conductor track (1.2) extends along an arc segment over a second central angle (α2) of less than 180° in the first direction (x).

12. Scanning element according to any of Claims 7 to 11, wherein the first receiver conductor track (1.1) extends along an arc segment over a first central angle (α1) of less than 180° in the first direction (x), wherein the second receiver conductor track (1.2) extends along an arc segment over a second central angle (α2) of less than 180° in the first direction (x), wherein the first receiver conductor track (1.1) is arranged offset relative to the second receiver conductor track (1.2) in the first direction (x).

13. Scanning element according to any of Claims 7 to 12, wherein exactly two second conductor track portions (1.211) are arranged offset from each other with respect to the third direction (z) and co-directionally along the sub-section (A) in the structure of the printed circuit board (1) and exactly one of the second conductor track portions (1.211) runs along the second part (B2) in the structure of the printed circuit board (1).

14. Scanning element according to any of Claims 7 to 13, wherein the second receiver conductor track (1.2) has a periodic characteristic having a period length (λ1) along the first direction (x), wherein the second part (B2) extends over a length which is at least equal to half the period length (λ1) in the first direction (x).

15. Scanning element according to any of Claims 7 to 14, wherein the first receiver conductor track (1.1) and the second receiver conductor track (1.2) each have a periodic characteristic having a period length (λ1) along the first direction (x), wherein the first part (B1) extends over a length and the second part (B2) extends over a length in the first direction (x), wherein the lengths are equal.

## Revendications

1. Élément de balayage pour un dispositif de mesure de position inductif comprenant une carte de circuit imprimé multicouche (1) qui comporte une première piste conductrice de réception (1.1) s'étendant le long d'une première direction (x), ainsi qu'une piste d'excitation (1.3), dans lequel
la première piste conductrice de réception (1.1) est formée de plusieurs premières sections de piste conductrice (1.111) qui sont connectées en série par des vias et forment un tracé conducteur électriquement continu, des boucles (1.11) étant formées à partir des premières sections de piste conductrice (1.111), dans lequel
deux premières sections de piste conductrice (1.111) sont disposées dans la structure de la carte de circuit imprimé (1) le long d'un tronçon (A), de manière décalée l'une par rapport à l'autre et parallèlement par rapport à une troisième direction (z), la troisième direction (z) étant orientée perpendiculairement à la première direction (x), dans lequel, dans le tronçon (A), les boucles (1.11) s'étendent parallèlement et de manière superposée dans la structure de la carte de circuit imprimé (1), de sorte que des signaux ayant respectivement la même phase peuvent être générés par les premières sections de piste conductrice (1.111) parallèles, de sorte que la connexion en série des premières sections de piste (1.111) parallèles entraîne une augmentation du niveau de signal, et
une autre des premières sections de piste conductrice (1.111) s'étend dans la structure de la carte de circuit imprimé (1) le long d'un premier segment (B1), disposé de manière décalée par rapport au tronçon (A) dans la première direction (x), une boucle (1.11) s'étendant simplement dans le premier segment (B1), sans qu'il n'y ait une autre boucle parallèle décalée dans la troisième direction (1.11), et sans qu'une première section de piste conductrice (1.111) soit disposée de manière décalée par rapport à la troisième direction (z) et parallèlement à l'autre première section de piste conductrice (1.111).

2. Élément de balayage selon la revendication 1, dans lequel les premières sections de piste conductrice (1.111) de la première piste conductrice de réception (1.1) s'étendent exactement sur quatre couches (L1, L2, L3, L4) de la carte de circuit imprimé (1).

3. Élément de balayage selon l'une quelconque des revendications précédentes, dans lequel la première piste conductrice de réception (1.1) s'étend dans la première direction (x) le long d'un segment d'arc sur un premier angle au centre (α1) inférieur à 180°.

4. Élément de balayage selon l'une quelconque des revendications précédentes, dans lequel exactement deux premières sections de piste conductrice (1.111) sont disposées dans la structure de la carte de circuit imprimé (1) le long du tronçon (A), de manière décalée l'une par rapport à l'autre et parallèlement par rapport à la troisième direction (z), et exactement une autre première section de piste conductrice (1.111) s'étend dans la structure de la carte de circuit imprimé (1) le long du premier segment (B1).

5. Élément de balayage selon l'une quelconque des revendications précédentes, dans lequel la première piste conductrice de réception (1.1) présente, le long de la première direction (x), un tracé périodique ayant une longueur de période (λ1), le premier segment (B1) s'étendant dans la première direction (x) sur une longueur au moins égale à la moitié de la longueur de période (λ1).

6. Élément de balayage selon l'une quelconque des revendications précédentes, dans lequel le tronçon (A) est disposé de manière décalée dans la première direction (x) par rapport au premier segment (B1).

7. Élément de balayage selon l'une quelconque des revendications précédentes, dans lequel la carte de circuit imprimé multicouche (1) comprend une deuxième piste conductrice de réception (1.2) s'étendant le long de la première direction (x), dans lequel la deuxième piste conductrice de réception (1.2) est formée de plusieurs deuxièmes sections de piste conductrice (1.211), qui sont connectées en série par des vias et forment un tracé conducteur électriquement continu, des boucles (1.21) étant formées à partir des deuxième sections de piste conductrice (1.211), dans lequel
deux deuxièmes sections de piste conductrice (1.211) sont disposées dans la structure de la carte de circuit imprimé (1) le long du tronçon (A), de manière décalée l'une par rapport et parallèlement par rapport à la troisième direction (z), dans lequel, dans le tronçon (A), les boucles (1.21) s'étendent parallèlement et de manière superposée dans la structure de la carte de circuit imprimé (1), de sorte que des signaux ayant respectivement la même phase peuvent être générés par les deuxièmes sections de piste conductrice (1.211) parallèles, de sorte que la connexion en série des deuxièmes sections de piste conductrice (1.211) parallèles entraîne une augmentation du niveau de signal, et
une autre des deuxièmes sections de piste conductrice (1.211) s'étend dans la structure de la carte de circuit imprimé (1) le long d'un deuxième segment (B2), disposé de manière décalée par rapport au tronçon (A) dans la première direction (x), une boucle (1.21) s'étendant simplement dans le deuxième segment (B2), sans qu'il n'y ait une autre boucle parallèle décalée dans la troisième direction (1.21), et sans qu'une deuxième section de piste conductrice (1.211) soit disposée de manière décalée par rapport à la troisième direction (z) et parallèlement à l'autre deuxième section de piste conductrice (1.211).

8. Élément de balayage selon la revendication 7, dans lequel la première piste conductrice de réception (1.1) et la deuxième piste conductrice de réception (1.2) présentent respectivement, le long de la première direction (x), un tracé périodique ayant la même longueur de période (λ1).

9. Élément de balayage selon la revendication 7 ou 8, dans lequel le premier segment (B1) est disposé de manière décalée dans la première direction (x) par rapport au deuxième segment (B2).

10. Élément de balayage selon l'une quelconque des revendications 7, 8 ou 9, dans lequel les premières sections de piste conductrice (1.111) de la première piste conductrice de réception (1.1) et les deuxièmes sections de piste conductrice (1.211) de la deuxième piste conductrice de réception (1.2) s'étendent exactement sur quatre couches (L1, L2, L3, L4) de la carte de circuit imprimé (1).

11. Élément de balayage selon l'une quelconque des revendications 7 à 10, dans lequel la deuxième piste conductrice de réception (1.2) s'étend dans la première direction (x) le long d'un segment d'arc sur un deuxième angle au centre (α2) inférieur à 180°.

12. Élément de balayage selon l'une quelconque des revendications 7 à 11, dans lequel la première piste conductrice de réception (1.1) s'étend dans la première direction (x) le long d'un segment d'arc sur un premier angle au centre (α1) inférieur à 180°, dans lequel la deuxième piste conductrice de réception (1.2) s'étend dans la première direction (x) le long d'un segment d'arc sur un deuxième angle au centre (α2) inférieur à 180°, la première piste conductrice de réception (1.1) étant disposée de manière décalée dans la première direction (x) par rapport à la deuxième piste conductrice de réception (1.2).

13. Élément de balayage selon l'une quelconque des revendications 7 à 12, dans lequel exactement deux deuxièmes sections de piste conductrice (1.211) sont disposées dans la structure de la carte de circuit imprimé (1) le long du tronçon (A), de manière décalée l'une par rapport à l'autre et parallèlement par rapport à la troisième direction (z), et exactement une des deuxièmes sections de piste conductrice (1.211) s'étend le long du deuxième segment (B2) dans la structure de la carte de circuit imprimé (1).

14. Élément de balayage selon l'une quelconque des revendications 7 à 13, dans lequel la deuxième piste conductrice de réception (1.2) présente, le long de la première direction (x), un tracé périodique ayant une longueur de période (λ1), le deuxième segment (B2) s'étendant dans la première direction (x) sur une longueur au moins égale à la moitié de la période (λ1).

15. Élément de balayage selon l'une quelconque des revendications 7 à 14, dans lequel la première piste conductrice de réception (1.1) et la deuxième piste conductrice de réception (1.2) présentent respectivement, le long de la première direction (x), un tracé périodique ayant une longueur de période (λ1), dans lequel, dans la première direction (x), le premier segment (B1) s'étend sur une longueur et le deuxième segment (B2) s'étend sur une longueur, lesdites longueurs étant égales.
